# EUROPEAN PATENT SPECIFICATION

(11) **EP 4 028 749 B1**
(45) Date of publication and mention of the grant of the patent: **25.12.2024**
(21) Application number: 20862146.6
(22) Date of filing: 10.09.2020
(51) Int. Cl.: G01N 21/85, G01J 3/02, G01J 3/42, G01N 21/39

(54) **A SYSTEM FOR IN-SITU GAS ANALYSIS**
SYSTEM ZUR IN-SITU-GASANALYSE
SYSTÈME D'ANALYSE DE GAZ IN SITU

(30) Priority: 13.09.2019 IN 201921036907
(43) Date of publication of application: 20.07.2022
(73) Proprietor: Forbes Marshall Private Limited, Pune 411 018 Maharashtra (IN)
(72) Inventor: BEKAL, Anish, Maharashtra 411034 (IN); RAJESHIRKE, Yashwant Govind, Maharashtra 411034 (IN); BALASUBRAMANIAM, B Gouri, Maharashtra 411034 (IN); SWAKUL, Vinay Ashok, Maharashtra 411034 (IN); SOMANGILI KRISHNAMOORTHY, Karthick Kumar, Maharashtra 411034 (IN); UPADHYAY, Mayank, Maharashtra 411034 (IN); MITRA, Chayan, Maharashtra 411034 (IN)
(74) Representative: Calysta NV
(86) International application number: PCT/IB2020/058398
(87) International publication number: WO 2021/048771

(56) References cited:
- EP-A1- 3 339 839
- EP-A2- 0 094 706
- EP-B1- 2 753 915
- US-A- 4 549 080
- US-A- 6 064 488
- US-A1- 2003 196 993
- US-A1- 2014 034 833
- US-A1- 2017 074 787

## Description

### FIELD

The present disclosure relates to the field of systems for gas analysis. In particular, the present disclosure relates to a gas analysis system for the characterization of flue gases.

### BACKGROUND

The background information herein below relates to the present disclosure but is not necessarily prior art.

Recent environmental regulation norms require measurement and control of NOₓ and CO in the flue gas from power plants driven on fossil fuel. Control of NOₓ emission requires a reduction of NOx using selective catalytic reduction (SCR) and Selective non-catalytic reduction (SNCR). In both these cases, ammonia (NH₃) is sprayed at a high temperature (> 300°C) to reduce NOₓ to nitrogen and water. Due to fluctuations in the combustion processes and loading of the power plants, there are wide variations in both NOₓ and NH₃ (ammonia slip) concentrations in the flue gas. The in-situ and real-time measurements of flue gas mixtures are thus required for regulatory requirements and active combustion control of the boilers.

Presently, the measurements are carried out through sampling of the flue gas from the stack (hot/cold extraction) and carrying out the measurement in an analyser installed at a distance of 10-30m from the sampling point. A major drawback of this technique is the change in the stoichiometry of the sampled gas or condensations due to fluctuations in the sampling line temperature. To prevent such changes in stoichiometry, salt formations, or condensations, the sampling line is kept at a constant pre-determined high temperature (based on the dew point of the gas mixtures) using automatic temperature (for tropical climates) or heater power (for cold climates) control. Regular monitoring and adjustments with test gas are required to ensure the fidelity of the measurement process. It leads to higher operational and maintenance costs for this type of system.

To mitigate the challenges due to complex gas sampling and conditioning processes, in-situ probes have been developed to measure the gas species concentrations directly in the gas flow path. This real-time measurement enables the active control of the combustor in synchronization with the load curve based on power demand.

US published patent application 20170074787 relates to internal combustion engine diagnostics and discloses a diagnostic system for measuring temperature, pressure, CO2 concentration and H2O concentration in a fluid stream. It is known from this reference that a laser source can be housed in an enclosure and a probe for sampling the gas is used. For example, it describes that a first laser light source is coupled to a first end of a first pitch optic cable. A second laser light source is coupled to a first end of a second pitch optic cable. A lens is disposed proximate to a second end of each of the first and the second pitch optic cables for directing the first and second lights through a sampling chamber to a mirror. A first catch optic cable has a second end disposed proximate the lens for receiving light output from the first laser light source that is reflected from the mirror. A second catch optic cable has a second end disposed proximate the lens for receiving light output from the second laser light source that is reflected from the mirror.

US patent 4549080 relates to a flue gas analyzer for the stacks of industrial furnaces. It discloses an apparatus for measuring the concentration of each gas in a mixture in a common sample chamber of H2 O, CO2, and CO wherein infrared radiation is passed through the sample chamber along a path to impinge upon an infrared detector.

US published application 20140034833 relates to internal combustion engine diagnostics and discloses apparatuses and methods for determining the spatial and temporal nonuniformities of CO2 in an intake fluid stream.

European patent application 0094706 relates to gas analysers e.g. for analysing the carbon monoxide content of flue gas. It is directed towards a gas analysing equipment which avoids the problems of taking gas samples from a flue and avoids the problems known in in situ equipment employing a beam splitter and two detectors where the detectors must be substantially identical in character.

European patent application 3559634 discloses a method for correcting the wavelength and the tuning range of a laser spectrometer, in which the light from a wavelength-tunable laser diode is detected and evaluated after it has passed through a gas.

US published application 20030196993 relates to semiconductor device manufacture and it discloses an apparatus and method for depositing one or more layers on a substrate using a line of electromagnetic radiation. It discloses optics arrangement continuous wave electromagnetic radiation source and substrate to focus the radiation on substrate.

However, all such systems have various problems, including signal deterioration, an inability to penetrate deeply, high cost, and the need for several probes.

The existing in-situ system uses tunable diode lasers (TDLs) and direct optical absorption spectroscopy (DOAS) technique for the measurement of gas species concentrations. The flue gas diffuses in the diffusion probe through a set of filters that form the measurement zone of the system. The laser radiation from one end of the probe is reflected at the other end using retro-reflectors, thereby forming a measurement path-length which is approximate twice the length of the probe. There are two major limitations with this method: the first limitation is the measurement of low concentrations at high temperatures. At high flue gas temperatures, the line-strength of the absorbing gas molecules decreases resulting in the decrease in measurement sensitivity of the concentrations and degradation of the signal-to-noise ratio. The second limitation is the reliability of the lasers. This mainly manifests as drift in the laser frequencies due to thermal conduction from the stack wall. Additional cooling mechanisms are required to prevent the laser drifts which results in higher operational costs of the in-situ measurement system.

The existing system for gas analysis is not suitable for deep penetration into large measurement zones (> 5m) due to difficulties in optical alignment. Signal degradation occurs in the existing system due to vibration. The conventional system also needs high-cost corrosion-resistant high-temperature mirrors. Also, the conventional system is not suitable if the laser source needs to be maintained at a fixed temperature.

Therefore, there is a need of a system for in-situ gas analysis that alleviates one or more aforementioned drawbacks.

### OBJECTS

Some of the objects of the present disclosure, which at least one embodiment herein satisfies, are as follows:
A primary object of the present disclosure is to provide a system for in-situ gas analysis.

Another object of the present disclosure is to provide a system for in-situ gas analysis, which allows accurate measurement of low gas concentrations at high temperatures.

Yet another object of the present disclosure is to provide a system for in-situ gas analysis, which does not require additional cooling mechanisms.

Another object of the present disclosure is to provide a system for in-situ gas analysis, which does not involve difficulties in optical alignment.

Yet another object of the present disclosure is to provide a system for in-situ gas analysis, which provides real-time measurement.

Another object of the present disclosure is to provide a system for in-situ gas analysis, which measures the gas concentrations directly in the gas flow path.

Yet another object of the present disclosure is to provide a system for in-situ gas analysis, which does not involve condensation of gas.

Another object of the present disclosure is to provide a system for in-situ gas analysis, which incurs low operational and maintenance cost.

Yet another object of the present disclosure is to provide a system for in-situ gas analysis, which is not affected by vibration.

Another object of the present disclosure is to provide a system for in-situ gas analysis, which should be resistant to high temperature.

Yet another object of the present disclosure is to provide a system for in-situ gas analysis, which should be resistance to corrosion.

Other objects and advantages of the present disclosure will be more apparent from the following description, which is not intended to limit the scope of the present disclosure.

### SUMMARY

There is provided a a system for in-situ gas analysis in a flue gas region according to appended independent claim 1. The system comprises an enclosure, a laser beam source housed in the enclosure, a tubular probe insertable for probing in the flue gas region, a detector and a processing unit. The laser beam source is configured to generate laser beams. The tubular probe comprises optical waveguides, a dead zone, a measurement zone and a reflection chamber. The optical waveguides are configured to receive and conduct laser beams generated by the laser beam source. The dead zone configured to support and isolate the optical waveguides contained therein from surrounding flue gases. The optical waveguides extend up to and project the generated laser beams from the farther end of the dead zone. The measurement zone is configured to receive the projected laser beams by the optical waveguides. The measurement zone is configured to allow the flue gas to pass therethrough and get exposed to the projected laser beams. The reflection chamber is located at the farther end of the measurement zone. The reflection chamber comprises a first focusing lens for focusing the projected laser beams that are exposed to the flue gases in the measurement zone and at least two mirrors, positioned as defined in independent claim 1, for reflecting back the focused laser beams towards the optical waveguides. The detector is configured to detect the reflected laser beam and generate at least one corresponding sensed signal. The processing unit is configured to process the sensed signal from the detector for computing composition of the flue gas.

Preferably, the laser beam source is configured to allow tuning of the frequency spectrum of the laser beam generated for identification of particular molecules present in the flue gas being analyzed.

Advantageously, the tubular probe comprises an insulation-cum-support tube along the dead zone for thermally insulating as well as structurally supporting the optical waveguides. Further, preferably, the insulation-cum-support tube consists of a first shield, a second shield and an air jacket defined by the space between the first shield and the second shield. The air jacket is configured to allow compressed air at ambient temperature to flow therethrough.

In an embodiment, the enclosure is temperature-stabilized and is configured to be positioned external to the flue gas region.

Typically, the detector includes a laser-optical sensor.

Preferably, the measurement zone is provided with a diffuser which allows diffusion of flue gases from the surrounding flue gas region into the measurement zone. Alternatively, the measurement zone is an open path cell.

Typically, the optical waveguides include a plurality of transmitting cables for transmitting the generated laser beams and projecting the generated laser beams into the measurement zone and at least one receiving cable for receiving the reflected laser beam and transmitting the reflecting beam to the detector.

In an embodiment, the optical waveguides include a plurality of sets of transmitting cables and a plurality of receiving cables. The plurality of sets of transmitting cables includes at least a first set of transmitting cables and a second set of transmitting cables for transmitting and projecting first generated laser beams containing a first frequency band and second generated laser beams containing a second frequency band respectively. The plurality of receiving cables includes a first receiving cable and a second receiving cable for receiving and transmitting a corresponding first reflected laser beam and a corresponding second reflected laser beam respectively. Accordingly, as the reflection chamber comprises at least two mirrors positioned one after the other along the longitudinal axis of the reflection chamber, the first mirror is configured to reflect the first generated laser beam and the second mirror is configured to reflect the second generated laser beam. Further, the detector comprises a second focusing lens for focusing a plurality of reflected laser beams including the first reflected laser beam and the second reflected laser beam. Accordingly, the dead zone comprises a first collimation lens assembly positioned at the farther end of the dead zone.

In an embodiment, the enclosure houses a plurality of gas cells provided for calibration, with one gas cell per laser beam source.

Preferably, the optical waveguides are made of chalcogenic cylindrical raw material such as As-Se, As-Se-Te, or Ge-Sb-Se, or are hollow waveguides.

The first focusing lens is formed by a group of lens which includes convex lens and fresnel lens.

### BRIEF DESCRIPTION OF THE ACCOMPANYING DRAWING

The system for in-situ gas analysis of the present disclosure will now be described with the help of the accompanying drawing, in which:
Figure 1 shows a schematic view of a system for in-situ gas analysis of the present disclosure in accordance with an example outside the scope of the invention;
**Figure 2** shows a sectional view of the tubular probe of the system for in-situ gas analysis of the present disclosure;
**Figure 3** shows a side sectional view of the tubular probe revealing the reflection chamber, the dead zone and the measurement zone of the system of Figure 1;
**Figure 4A** shows a sectional view of the tubular probe for in-situ gas analysis of the present disclosure in accordance with another embodiment;
**Figure 4B** shows a side sectional view of the reflection chamber in accordance with the embodiment of Figure 4A; and

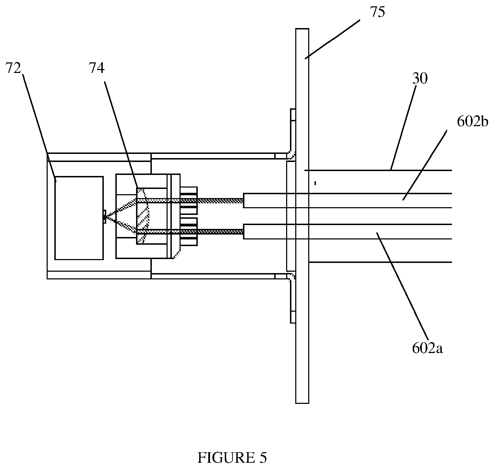

**Figure 5** shows a sectional view of the detector in accordance with the embodiment of Figures 4A-4B.

### LIST OF REFERENCE NUMERALS USED IN DETAILED DESCRIPTION AND DRAWING

- 1000: System for in-situ gas analysis of the present disclosure
- 10: Enclosure
- 20: Laser beam source
- 22: Gas cell
- 24: Parabolic mirror
- 26: Probe head
- 30: Dead zone
- 32: Insulation-cum-support tube
- 32a: Inner shield
- 32b: Outer shield
- 32c: Air jacket
- 34: First collimation lens assembly
- 40: Measurement zone
- 42: Diffuser
- 50: Reflection chamber
- 52: First focusing lens
- 54: Mirror
- 54a: First mirror
- 54b: Second mirror
- 60: Optical waveguide
- 60a: Transmitting cables
- 60b: Receiving cable
- 601a: First set of transmitting cables
- 602a: Second set of transmitting cables
- 601b: First receiving cable
- 602b: Second receiving cable
- 65: Flue gas region
- 70: Detector
- 72: Laser-optical sensor
- 74: Second focusing lens
- 75: Mounting flange

### DETAILED DESCRIPTION

Embodiments, of the present disclosure, will now be described with reference to the accompanying drawing.

Embodiments are provided so as to thoroughly and fully convey the scope of the present disclosure to the person skilled in the art. Numerous details are set forth, relating to specific components, and methods, to provide a complete understanding of embodiments of the present disclosure. It will be apparent to the person skilled in the art that the details provided in the embodiments should not be construed to limit the scope of the invention which is only limited by the scope of the appended claims. In some embodiments, well-known processes, well-known apparatus structures, and well-known techniques are not described in detail.

The terminology used, in the present disclosure, is only for the purpose of explaining a particular embodiment and such terminology shall not be considered to limit the scope of the present disclosure. As used in the present disclosure, the forms "a", "an" and "the" may be intended to include the plural forms as well, unless the context clearly suggests otherwise. The terms "comprises", "comprising", "including" and "having" are open-ended transitional phrases and therefore specify the presence of stated features, integers, steps, operations, elements, modules, units and/or components, but do not forbid the presence or addition of one or more other features, integers, steps, operations, elements, components, and/or groups thereof. The particular order of steps disclosed in the method and process of the present disclosure is not to be construed as necessarily requiring their performance as described or illustrated. It is also to be understood that additional or alternative steps may be employed.

When an element is referred to as being "mounted on", "engaged to", "connected to" or 'coupled to" another element, it may be directly on, engaged, connected or coupled to the other element. As used herein, the term "and/or" includes any and all combinations of one or more of the associated listed elements.

The terms first, second, third, etc., should not be construed to limit the scope of the present disclosure as the aforementioned terms may be only used to distinguish one element, component, region, layer or section from another component, region, layer or section. Terms such as first, second, third etc., when used herein do not imply a specific sequence or order unless clearly suggested by the present disclosure.

Terms such as "inner", "outer", "beneath", "below", "lower", "above", "upper" and the like, may be used in the present disclosure to describe relationships between different elements as depicted from the figures.

Conventional methods of measurement of the concentration of gases involve sampling of gases from the source and transporting them to the analyser located 10-30m away. The stoichiometry of the sample gas, salt formations, or condensation changes due to fluctuations in the sampling line temperature. In order to counteract such a change, the sampling line is kept at a constant pre-determined high temperature. Such systems incur high operating and maintenance costs for regular monitoring and adjustment with a test gas, which is necessary to ensure the accuracy of the measuring process. To mitigate these challenges, in-situ gas analysis is proposed.

While in-situ analysis of flue gases in combustion chambers and the like using LASER is known, the desired accuracy of the analysis of flue gases could not be achieved due to the depth of the chambers at which the gases are desired to be analyzed. When the light moves to depths of 3 m and beyond, the light is subject to scattering, diffraction, etc. by the vibrating gas molecules, which are produced at high temperatures, i.e., 500°C and above. Moreover, it is also desired to keep the light source at room temperature. Hence, the source cannot be exposed to the high temperatures within or in direct contact with the combustion chamber. Thus, a system for in-situ gas analysis is required, which has improved accuracy and which eliminates or mitigates the aforementioned issues.

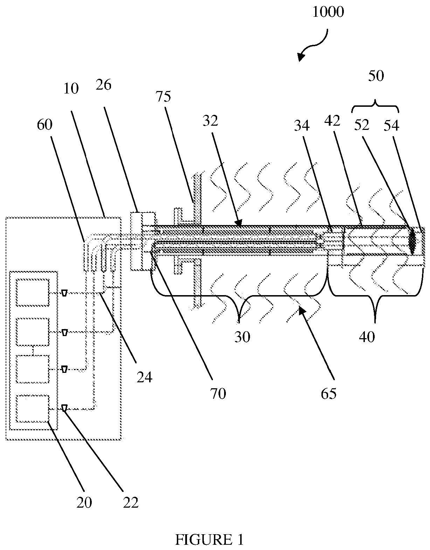

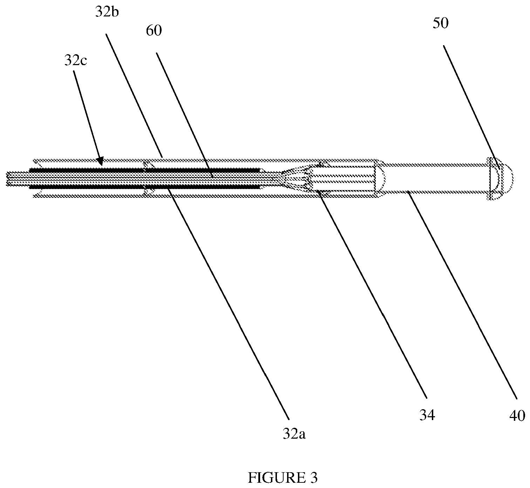

An example outside the scope of the invention and a preferred embodiment of the present invention will now be described with reference to Figures 1-3. In Fig. 1, an example of a system 1000 for in-situ gas analysis in a flue gas region 65 comprises an enclosure 10, a laser beam source 20 housed in the enclosure 10, a tubular probe insertable for probing in the flue gas region 65, at least one detector 70 and a processing unit. The laser beam source 20 is configured to generate laser beams. Thus, the enclosure 10 is positioned external to the flue gas region 65. The tubular probe comprises optical waveguides 60, a dead zone 30, a measurement zone 40 and a reflection chamber 50. The optical waveguides 60 are configured to receive and conduct laser beams generated by the laser beam source 20. The dead zone 30 configured to support and isolate the optical waveguides 60 contained therein from surrounding flue gases. The optical waveguides 60 extend up to and project the generated laser beams from the farther end of the dead zone 30. The measurement zone 40 is configured to receive the projected laser beams by the optical waveguides 60. The measurement zone 40 is configured to allow the flue gas to pass therethrough and get exposed to the projected laser beams. The reflection chamber 50 is located at the farther end of the measurement zone 40. The reflection chamber 50 comprises a first focusing lens 52 for focusing the projected laser beams that are exposed to the flue gases in the measurement zone 40 and a mirror 54 for reflecting back the focused laser beams towards the optical waveguides 60. The detector 70, typically placed in a probe head 26, is configured to detect the reflected laser beam and generate at least one corresponding sensed signal. The processing unit is configured to process the sensed signal from the detector 70 for computing composition of the flue gas.

Preferably, the laser beam source 20 is configured to allow tuning of the frequency spectrum of the laser beam generated, using direct optical absorption spectroscopy (DOAS) or wavelength modulation spectroscopy (WMS) or frequency modulation spectroscopy (FMS), for identification of particular molecules present in the flue gas being analyzed.

In an embodiment, the enclosure 10 is temperature-stabilized and is configured to be positioned external to the flue gas region. In an embodiment, the enclosure 10 houses a plurality of gas cells 22 provided for calibration, with one gas cell 22 per laser beam source 20.

A plurality of parabolic mirrors 24 can be used to direct the laser beam emanating from the laser beam sources 20 into each of the optical waveguides 60. Preferably, each of the laser beam sources 20 is a QCL, i.e., quantum cascade laser or tunable diode lasers (TDLs).

Typically, the first focusing lens 52 formed by a group of lens which includes convex lens and fresnel lens.

The tubular probe is mounted using a mounting flange 75. The mounting flange 75 is provided with a circumferential sealing means.

The laser beam projected from the optical waveguides 60 interacts with the high-temperature flue gases in the measurement zone 40. Further, the first focusing lens 52 of the reflection chamber 50 collimates the laser beam traveling within the measurement zone 40. The mirror 54 of the reflection chamber 50 reflects the laser beam towards the optical waveguides 60 parallel to the incident light. The optical waveguides 60 transmit the light coming from the measurement zone 40 into the detector 70. The detector 70 generates signals corresponding to the light and transmits to the processing unit. The processing unit analyses the signals thus received for identifying contents of the flue gases that are analyzed. The processing unit is preferably disposed within the temperature-controlled optical source enclosure 10.

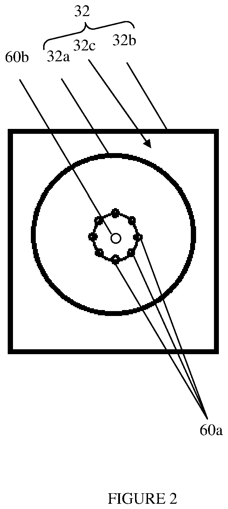

In an advantageous embodiment, as shown in Figure 2, the tubular probe comprises an insulation-cum-support tube 32 along the dead zone for thermally insulating as well as structurally supporting the optical waveguides 60. The insulation-cum-support tube 32 consists of a first shield 32a, a second shield 32b and an air jacket 32c defined by the space between the first shield 32a and the second shield 32b. Compressed air at ambient temperature is made to flow through air jacket 32c.

The dead zone 30 comprises a first collimation lens assembly 34 positioned at the farther end of the dead zone 30. The first collimation lens assembly 34 aligns each of the beams in its intended direction of impingement on the first focusing lens 52.

Preferably, the measurement zone 40 is provided with a diffuser 42 which allows diffusion of flue gases from the surrounding flue gas region into the measurement zone 40. Alternatively, the measurement zone 40 is an open path cell.

Typically, the detector 70 includes a laser-optical sensor 72.

Typically, as shown in **Figure 2****,** the optical waveguides 60 include a plurality of transmitting cables (60a) for transmitting the generated laser beams and projecting the generated laser beams into the measurement zone 40 and at least one receiving cable 60b for receiving the reflected laser beam and transmitting the reflecting beam to the detector 70.

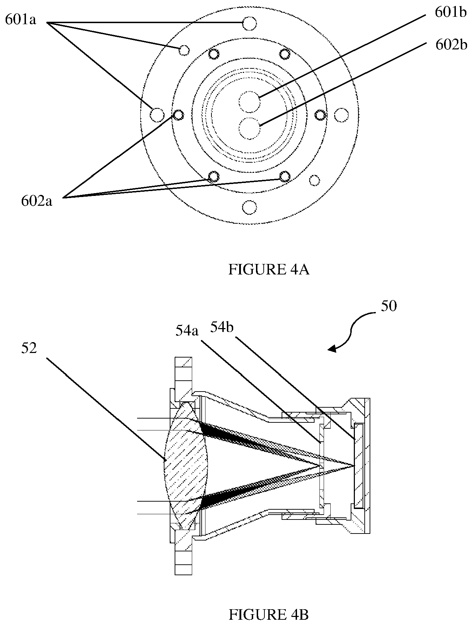

In an embodiment, as shown in **Figure 4****,** the optical waveguides 60 include a plurality of sets of transmitting cables and a plurality of receiving cables. The plurality of sets of transmitting cables includes at least a first set of transmitting cables 601a and a second set of transmitting cables 602a. The first set of transmitting cables 601a transmits and projects first generated laser beams containing a first frequency band. The second set of transmitting cables 602a transmits and projects second generated laser beams containing a second frequency band. The plurality of receiving cables includes a first receiving cable 601b and a second receiving cable 602b. The first receiving cable 601b receives and transmits a first reflected laser beam corresponding to the first frequency band. The second receiving cable 602b receives and transmits a second reflected laser beam corresponding to the second frequency band.

According to the invention, and as shown in Fig. 4B, the reflection chamber 50 comprises at least two mirrors 54a, 54b positioned one after the other along the longitudinal axis of the reflection chamber 50. A first mirror 54a is configured to reflect the first generated laser beam and a second mirror 54b is configured to reflect the second generated laser beam. Further, the detector 70 comprises a second focusing lens 74 for focusing a plurality of reflected laser beams including the first reflected laser beam and the second reflected laser beam. In an embodiment, the detector 70 may include a second collimation lens assembly (not shown).

The positioning and the stability of the various components within the tubular probe, including the cables, the lenses, the mirror can be provided using clamps, brackets, and the like, known in the art.

Preferably, the optical tubes 60 of the tubular probe of the present disclosure have a reflective internal surface. The optical tubes 60 are hollow fiber/glass tubes having silver coating on the internal surface. In another embodiment, the optical tubes 60 are hollow waveguide made of chalcogenic cylindrical raw material such as As-Se, As-Se-Te or Ge-Sb-Se, or are hollow waveguides . The property of having a reflective internal surface prevents the distortion due to diffraction, scattering, and so on, of the light that is transmitted through the optical tubes 60 due to any surrounding gases. Due to the low attenuation factor (measured in dB/m) of the optical tubes 60, the range of the tubular probe of the in-situ gas analysis system 1000 of the present disclosure increases significantly as compared to in-situ gas analysis systems of the prior art. Accurate analysis of flue gases produced in chambers having depths of 10m and beyond can be done using the in-situ gas analysis system 1000 of the present disclosure.

In a typical embodiment, the length of the measurement zone 40 is 0.5m, whereas the length of the dead zone can be extended significantly due to the low attenuation factor of the optical tubes 60. Thus, the in-situ gas analysis system 1000 of the present disclosure requires optical alignment to be maintained only in a measurement zone of typically 0.5m. Also, the optical source 20 can be arranged at a sufficient distance from the combustion chamber so that no system for cooling the light sources is required. Moreover, low-cost mirrors can be used in the reflection chamber 50, thereby avoiding the use of the corrosion-resistant mirrors used in the prior art and saving almost three times the cost.

The processing unit may include a repository for storing information such as chemical formulae of gaseous and suspended solid components expected to be detected in the flue gases. The processing unit may include an analog-to-digital convertor, a digital filter module, a time-domain-to-frequency-domain conversion module, a crawler-and-extractor module and so on. The digital filter module may be configured to subject the detected signal to a bandpass filter, an anti-aliasing filter, a noise removal filter and the like. The time-domain-to-frequency-domain conversion module is configured to convert the data from time domain to frequency domain. The crawler-and-extractor module is configured to compare processed data to the information stored in the memory and identify composition of the flue gas, including contained gases, their proportions by weight and so on.

The foregoing description of the embodiments has been provided for purposes of illustration and not intended to limit the scope of the present invention, which is limited only by the scope of the appended claims. Individual components of a particular embodiment are generally not limited to that particular embodiment, but, are interchangeable within the scope of the appended claims.

### TECHNICAL ADVANCEMENTS

The present disclosure described hereinabove has several technical advantages including, but not limited to, the realization of a system for in-situ gas analysis, which:
- prevents drop in accuracy due to vibration, diffraction, and scattering (x10);
- requires optical alignment to be maintained only in measurement zone typically 0.5 meters;
- uses lower-cost optical element instead of corrosion resistance mirrors;
- allows placement of the source far from the high-temperature zone;
- does not require transportation of sampling of gases from the source to the analyser located 10-30m away and hence does not lead to change in the stoichiometry of gases due to sampling; and
- does not require conditioning of the gases to be analyzed.

The foregoing disclosure has been described with reference to the accompanying embodiments which do not limit the scope of the invention, which is limited only by the scope of the appended claims. The description provided is purely by way of example and illustration.

The embodiments herein and the various features and advantageous details thereof are explained with reference to the non-limiting embodiments in the following description. Descriptions of well-known components and processing techniques are omitted so as to not unnecessarily obscure the embodiments herein. The examples used herein are intended merely to facilitate an understanding of ways in which the embodiments herein may be practiced and to further enable those of skill in the art to practice the embodiments herein. Accordingly, the examples should not be construed as limiting the scope of the embodiments herein. is to be understood that the phraseology or terminology employed herein is for the purpose of description and not of limitation.

The use of the expression "at least" or "at least one" suggests the use of one or more elements or ingredients or quantities, as the use may be in the embodiment of the disclosure to achieve one or more of the desired objects or results.

Any discussion of documents, acts, materials, devices, articles or the like that has been included in this specification is solely for the purpose of providing a context for the disclosure. It is not to be taken as an admission that any or all of these matters form a part of the prior art base or were common general knowledge in the field relevant to the disclosure as it existed anywhere before the priority date of this application.

While considerable emphasis has been placed herein on the components and component parts of the preferred embodiments, it will be appreciated that many embodiments can be made and that many changes can be made in the preferred embodiments, limited only by the scope of the appended claims. These and other changes in the preferred embodiment as well as other embodiments of the disclosure will be apparent to those skilled in the art from the disclosure herein, whereby it is to be distinctly understood that the foregoing descriptive matter is to be interpreted merely as illustrative of the disclosure and not as a limitation. The invention is defined with the appended claims.

## Claims

1. A system (1000) for in-situ gas analysis in a flue gas region (65), wherein said system (1000) comprises:
• An enclosure (10);
• A laser beam source (20) housed in said enclosure (10), said laser beam source (20) configured to generate laser beams;
• A tubular probe insertable for probing in the flue gas region (65), said probe comprising:
∘ optical waveguides (60) configured to receive and conduct laser beams generated by said laser beam source (20);
∘ a dead zone (30) configured to support and isolate said optical waveguides (60) contained therein from surrounding flue gases, said optical waveguides (60) extending upto and projecting said generated laser beams from the farther end of said dead zone (30);
∘ a measurement zone (40) configured to receive said projected laser beams by said optical waveguides (60), said measurement zone (40) configured to allow said flue gas to pass therethrough and get exposed to said projected laser beams; and
∘ a reflection chamber (50) located at the farther end of said measurement zone (40), said reflection chamber (50) comprising a first focusing lens (52) for focusing said projected laser beams that are exposed to said flue gases in said measurement zone (40), and at least two mirrors (54a,54b) for reflecting back said focused laser beams towards said optical waveguides (60) and positioned one after the other along the longitudinal axis of said reflection chamber (50), wherein a first mirror (54a) is configured to reflect a first generated laser beam and a second mirror (54b) is configured to reflect a second generated laser beam;
• at least one detector (70) configured to detect said at least one reflected laser beam and generate at least one corresponding sensed signal; and
• a processing unit configured to process said sensed signal from said detector (70) for computing composition of said flue gas.

2. The system (1000) as claimed according to claim 1, wherein said laser beam source (20) is configured to allow tuning of the frequency spectrum of the laser beam generated for identification of particular molecules present in the flue gas being analyzed.

3. The system (1000) as claimed according to claim 1, wherein said tubular probe comprises an insulation-cum-support tube (32) along the dead zone for thermally insulating as well as structurally supporting the optical waveguides (60).

4. The system (1000) as claimed according to claim 3, wherein said insulation-cum-support tube (32) consists of a first shield (32a), a second shield (32b) and an air jacket (32c) defined by the space between said first shield (32a) and said second shield (32b), said air jacket (32c) being configured to allow compressed air at ambient temperature to flow therethrough.

5. The system (1000) as claimed according to claim 1, wherein said enclosure (10) is temperature-stabilized and is configured to be positioned external to said flue gas region (65).

6. The system (1000) as claimed according to claim 1, wherein said detector (70) includes a laser-optical sensor (72).

7. The system (1000) as claimed according to claim 1, wherein said measurement zone (40) is provided with a diffuser (42) which allows diffusion of flue gases from the surrounding flue gas region (65) into the measurement zone (40) or said measurement zone (40) is an open path cell.

8. The system (1000) as claimed according to claim 1, wherein said optical waveguides (60) include a plurality of transmitting cables (60a) for transmitting said generated laser beams and projecting said generated laser beams into said measurement zone (40) and at least one receiving cable (60b) for receiving said reflected laser beam and transmitting said reflecting beam to said detector (70).

9. The system (1000) as claimed according to claim 8, wherein said optical waveguides (60) include a plurality of sets of transmitting cables and a plurality of receiving cables, said plurality of sets of transmitting cables includes at least a first set of transmitting cables (601a) and a second set of transmitting cables (602a) for transmitting and projecting first generated laser beams containing a first frequency band and second generated laser beams containing a second frequency band respectively, and said plurality of receiving cables includes a first receiving cable (601b) and a second receiving cable (602b) for receiving and transmitting a corresponding first reflected laser beam and a corresponding second reflected laser beam respectively.

10. The system as claimed according to claim 1, wherein said detector (70) comprises a second focusing lens (74) for focusing a plurality of reflected laser beams including said first reflected laser beam and said second reflected laser beam.

11. The system (1000) as claimed according to claim 1, wherein said dead zone (30) comprises a collimation lens assembly (34) positioned at the farther end of said dead zone (30).

12. The system (1000) as claimed according to claim 1, wherein said enclosure (10) houses a plurality of gas cells (22) provided for calibration, with one gas cell (22) per laser beam source (20).

13. The system (1000) as claimed according to claim 1, wherein said optical waveguides (60) are made of chalcogenic cylindrical raw material such as As-Se, As-Se-Te, or Ge-Sb-Se, or are hollow waveguides.

14. The system (1000) as claimed according to claim 1, wherein said first focusing lens (52) formed by a group of lens which includes convex lens and fresnel lens.

## Patentansprüche

1. System (1000) zur In-situ-Gasanalyse in einem Rauchgasbereich (65), wobei das System (1000) umfasst:
• ein Gehäuse (10);
• eine Laserstrahlquelle (20), die in dem Gehäuse (10) untergebracht ist, wobei die Laserstrahlquelle (20) so ausgelegt ist, dass sie Laserstrahlen erzeugt;
• ein rohrförmiger Sensor, der zur Untersuchung im Rauchgasbereich (65) eingeführt werden kann, wobei der Sensor Folgendes umfasst:
o Lichtwellenleiter (60), die so ausgelegt sind, dass sie die von der Laserstrahlquelle (20) erzeugten Laserstrahlen empfangen und leiten;
o eine tote Zone (30), die so ausgelegt ist, dass sie die darin enthaltenen Lichtwellenleiter (60) stützt und von den umgebenden Rauchgasen isoliert, wobei sich die Lichtwellenleiter (60) bis zum entfernteren Ende der toten Zone (30) erstrecken und die erzeugten Laserstrahlen von dort projizieren;
o eine Messzone (40), die so ausgelegt ist, dass sie die durch die Lichtwellenleiter (60) projizierten Laserstrahlen empfängt, wobei die Messzone (40) so ausgelegt ist, dass das Rauchgas durch sie hindurchtreten kann und den projizierten Laserstrahlen ausgesetzt wird; und
o eine Reflexionskammer (50), die sich am entfernteren Ende der Messzone (40) befindet, wobei die Reflexionskammer (50) eine erste Fokussierungslinse (52) zum Fokussieren der projizierten Laserstrahlen, die den Rauchgasen in der Messzone (40) ausgesetzt sind, und mindestens zwei Spiegel (54a, 54b) zum Zurückreflektieren der fokussierten Laserstrahlen in Richtung der Lichtwellenleiter (60) umfasst, die hintereinander entlang der Längsachse der Reflexionskammer (50) angeordnet sind, wobei ein erster Spiegel (54a) so ausgelegt ist, dass er einen ersten erzeugten Laserstrahl reflektiert, und ein zweiter Spiegel (54b) so ausgelegt ist, dass er einen zweiten erzeugten Laserstrahl reflektiert,
• mindestens einen Detektor (70), der so ausgelegt ist, dass er den mindestens einen reflektierten Laserstrahl erfasst und mindestens ein entsprechendes erfasstes Signal erzeugt; und
• eine Verarbeitungseinheit, die so ausgelegt ist, dass sie das vom Detektor (70) erfasste Signal verarbeitet, um die Zusammensetzung des Rauchgases zu berechnen.

2. System (1000) nach Anspruch 1, wobei die Laserstrahlquelle (20) so ausgelegt ist, dass sie die Abstimmung des Frequenzspektrums des zur Identifizierung bestimmter Moleküle, die in dem zu analysierenden Rauchgas vorhanden sind, erzeugten Laserstrahls ermöglicht.

3. System (1000) nach Anspruch 1, wobei der rohrförmige Sensor ein Isolations- und Stützrohr (32) entlang der toten Zone umfasst, um die Lichtwellenleiter (60) sowohl thermisch zu isolieren als auch strukturell zu stützen.

4. System (1000) nach Anspruch 3, wobei das Isolations- und Stützrohr (32) aus einer ersten Abschirmung (32a), einer zweiten Abschirmung (32b) und einem Luftmantel (32c) besteht, der durch den Raum zwischen der ersten Abschirmung (32a) und der zweiten Abschirmung (32b) definiert ist, wobei der Luftmantel (32c) so ausgelegt ist, dass Druckluft bei Umgebungstemperatur durch ihn strömen kann.

5. System (1000) nach Anspruch 1, wobei das Gehäuse (10) temperaturstabilisiert ist und so ausgelegt ist, dass es außerhalb des Rauchgasbereichs (65) angeordnet ist.

6. System (1000) nach Anspruch 1, wobei der Detektor (70) einen laseroptischen Sensor (72) enthält.

7. System (1000) nach Anspruch 1, wobei die Messzone (40) mit einem Diffusor (42) versehen ist, der die Ausbreitung von Rauchgasen aus dem umgebenden Rauchgasbereich (65) in die Messzone (40) ermöglicht, oder die Messzone (40) eine Open-Path-Zelle ist.

8. System (1000) nach Anspruch 1, wobei die Lichtwellenleiter (60) eine Vielzahl von Sendekabeln (60a) zum Senden der erzeugten Laserstrahlen und zum Projizieren der erzeugten Laserstrahlen in die Messzone (40) und mindestens ein Empfangskabel (60b) zum Empfangen des reflektierten Laserstrahls und zum Senden des reflektierten Strahls zum Detektor (70) umfassen.

9. System (1000) nach Anspruch 8, wobei die
Lichtwellenleiter (60) eine Vielzahl von Sätzen von Sendekabeln und eine Vielzahl von Empfangskabeln umfassen, wobei die Vielzahl von Sätzen von Sendekabeln mindestens einen ersten Satz von Sendekabeln (601a) und einen zweiten Satz von Sendekabeln (602a) zum Senden und Projizieren von ersten erzeugten Laserstrahlen, die ein erstes Frequenzband enthalten, bzw. von zweiten erzeugten Laserstrahlen, die ein zweites Frequenzband enthalten, umfasst und die Vielzahl von Empfangskabeln ein erstes Empfangskabel (601b) und ein zweites Empfangskabel (602b) zum Empfangen und Senden eines entsprechenden ersten reflektierten Laserstrahls bzw. eines entsprechenden zweiten reflektierten Laserstrahls umfasst.

10. System nach Anspruch 1, wobei der Detektor (70) eine zweite Fokussierlinse (74) zum Fokussieren einer Vielzahl von reflektierten Laserstrahlen, einschließlich des ersten reflektierten Laserstrahls und des zweiten reflektierten Laserstrahls, umfasst.

11. System (1000) nach Anspruch 1, wobei die Totzone (30) eine Kollimationslinsenanordnung (34) umfasst, die am entfernteren Ende der Totzone (30) angeordnet ist.

12. System (1000) nach Anspruch 1, wobei das Gehäuse (10) eine Vielzahl von Gaszellen (22) beherbergt, die zur Kalibrierung vorgesehen sind, und zwar eine Gaszelle (22) pro Laserstrahlquelle (20).

13. System (1000) nach Anspruch 1, wobei die Lichtwellenleiter (60) aus chalkogenem zylindrischem Rohmaterial wie As-Se, As-Se-Te oder Ge-Sb-Se hergestellt sind oder Hohlwellenleiter sind.

14. System (1000) nach Anspruch 1, wobei die erste Fokussierlinse (52) durch eine Gruppe von Linsen ausgebildet wird, die Konvexlinsen und Fresnellinsen umfasst.

## Revendications

1. Système (1000) d'analyse de gaz in-situ dans une région de gaz de combustion (65), dans lequel ledit système (1000) comprend :
• une enclave (10) ;
• une source de faisceau laser (20) logée dans ladite enclave (10), ladite source de faisceau laser (20) étant configurée pour générer des faisceaux laser ;
• une sonde tubulaire insérable destinée à effectuer le sondage dans la région de gaz de combustion (65), ladite sonde comprenant :
o des guides d'ondes optiques (60) configurés pour recevoir et conduire les faisceaux laser générés par ladite source de faisceau laser (20) ;
o une zone morte (30) configurée pour contenir et isoler lesdits guides d'ondes optiques (60) qu'elle contient des gaz de combustion, lesdits guides d'ondes optiques (60) se prolongeant jusqu'aux faisceaux laser générés et les projetant depuis l'extrémité la plus éloignée de ladite zone morte (30) ;
o une zone de mesure (40) configurée pour recevoir lesdits faisceaux laser projetés par lesdits guides d'ondes optiques (60), ladite zone de mesure (40) configurée pour permettre audit gaz de combustion de la traverser et d'être exposé auxdits faisceaux laser projetés ; et
o une chambre de réflexion (50) située à l'extrémité la plus éloignée de ladite zone de mesure (40), ladite chambre de réflexion (50) comprenant une première lentille de focalisation (52) permettant de focaliser lesdits faisceaux laser projetés qui sont exposés aux gaz de combustion dans ladite zone de mesure (40), et au moins deux miroirs (54a, 54b) permettant de renvoyer lesdits faisceaux laser focalisés vers lesdits guides d'ondes optiques (60) et positionnés l'un après l'autre le long de
l'axe longitudinal de ladite chambre de réflexion (50), un premier miroir (54a) étant configuré pour réfléchir un premier faisceau laser généré et un deuxième miroir (54b) étant configuré pour réfléchir un deuxième faisceau laser généré ;
• au moins un détecteur (70) configurer pour détecter ledit au moins un faisceau laser réfléchi et générer un signal détecté correspondant ; et
• une unité de traitement configurée pour traiter ledit signal détecté à partir dudit détecteur (70) afin de calculer la composition des gaz de combustion.

2. Système (1000) selon la revendication 1, dans lequel ladite source de faisceau laser (20) est configurée pour permettre de modifier le spectre de fréquence du faisceau laser généré pour identifier les molécules particulières présentes dans le gaz de combustion analysé.

3. Système (1000) selon la revendication 1, dans lequel ladite sonde tubulaire comprend un tube d'isolation et de support (32) le long de la zone morte pour isoler thermiquement et soutenir structurellement les guides d'ondes optiques (60).

4. Système (1000) selon la revendication 3, dans lequel ledit tube d'isolation et de support (32) est constitué d'un premier écran (32a), d'un deuxième écran (32b) et d'une enveloppe d'air (32c) définie par l'espace entre le premier écran (32a) et le deuxième écran (32b), ladite enveloppe d'air (32c) étant configurée pour permettre à l'air comprimé à température ambiante de s'écouler à travers elle.

5. Système (1000) selon la revendication 1, dans lequel ladite enclave (10) est stabilisée en température et est configurée pour être positionnée à l'extérieur de ladite région de gaz de combustion (65).

6. Système (1000) selon la revendication 1, dans lequel ledit détecteur (70) comprend un capteur optique laser (72).

7. Système (1000) selon la revendication 1, dans lequel ladite zone de mesure (40) est dotée d'un diffuseur (42) qui permet de diffuser les gaz de combustion à partir des environs la région de gaz de combustion (65) vers la zone de mesure (40) ou ladite zone de mesure (40) est une cellule à trajectoire ouverte.

8. Système (1000) selon la revendication 1, dans lequel lesdits guides d'ondes optiques (60) comportent une pluralité de câbles de transmission (60a) permettant de transmettre lesdits faisceaux laser générés et de les projeter dans ladite zone de mesure (40) et au moins un câble de réception (60b) permettant de recevoir ledit faisceau laser réfléchi et de le transmettre audit détecteur (70).

9. Système (1000) selon la revendication 8,
dans lequel lesdits guides d'ondes
optiques (60) comportent une pluralité d'ensembles de câbles de transmission et une pluralité de câbles de réception, ladite pluralité de câbles de transmission comporte au moins un premier ensemble de câbles de transmission (601a) et un deuxième ensemble de câbles de transmission (602a) pour transmettre et projeter les premiers faisceaux laser générés contenant une bande de première fréquence et des deuxièmes faisceaux laser générés contenant une bande de deuxième fréquence respectivement, et ladite pluralité de câbles de réception comprend un premier câble de réception (601b) et un deuxième câble de réception (602b) permettant de recevoir et de transmettre un premier faisceau laser réfléchi correspondant et un deuxième faisceau laser réfléchi correspondant respectivement.

10. Système selon la revendication 1, dans lequel ledit détecteur (70) comprend une deuxième lentille de focalisation (74) permettant de focaliser une pluralité de faisceaux laser réfléchis, y compris ledit premier faisceau laser réfléchi et ledit deuxième faisceau laser réfléchi.

11. Système (1000) selon la revendication 1, dans lequel ladite zone morte (30) comprend un assemblage de lentilles de collimation (34) positionné à l'extrémité la plus éloignée de ladite zone morte (30).

12. Système (1000) selon la revendication 1, dans lequel ladite enclave (10) loge une pluralité de cellules gazeuses (22) prévue pour l'étalonnage, avec une cellule gazeuse (22) par source de faisceau laser (20).

13. Système (1000) selon la revendication 1, dans lequel lesdits guides d'ondes optiques (60) sont constitués d'une matière première cylindrique chalcogène telle que As-Se, As-Se-Te, ou Ge-Sb-Se, ou sont des guides d'ondes creux.

14. Système (1000) selon la revendication 1, dans lequel ladite première lentille de focalisation (52) est formée par un groupe de lentilles qui comporte une lentille convexe et une lentille de Fresnel.
